# FASCICULE DE BREVET EUROPEEN

(11) **EP 1 359 028 B1**
(45) Date de publication et mention de la délivrance du brevet: **28.01.2015**
(21) Numéro de dépôt: 03009138.3
(22) Date de dépôt: 22.04.2003
(51) Int. Cl.: B60C 7/16, B60C 7/10, B60C 9/18, B60C 7/12

(54) **Bandage flexible non pneumatique**
Druckloser elastischer Reifen
Non pneumatic elastic tyre

(30) Priorité: 29.04.2002 FR 0205474
(43) Date de publication de la demande: 05.11.2003
(73) Titulaire: MICHELIN Recherche et Technique S.A., 1763 Granges-Paccot (CH)
(72) Inventeur: Delfino, Antonio, 1772 Grolley (CH); Hinc, Henry, 63360 Saint Beauzire (FR); Laurent, Daniel, 1723 Marly (CH)
(74) Mandataire: Bauvir, Jacques

(56) Documents cités:
- WO-A-00/37269
- US-A- 1 450 473
- US-A- 4 248 287
- US-A- 4 307 767

## Description

La présente invention concerne les bandages montés sur roues et conçus pour être capables de porter une charge substantielle sans pression de gonflage, appelés bandages non pneumatiques.

La demande de brevet WO 00/37.269 propose un tel bandage élastique non pneumatique. Elle décrit une structure porteuse comportant essentiellement une pluralité d'éléments de support disposés sensiblement radialement, selon une symétrie cyclique tout autour de la circonférence du bandage. Lorsque le bandage décrit dans la demande de brevet WO 00/37.269 porte une charge, un certain nombre d'éléments de support présents dans l'aire de contact sont soumis à une flexion importante, ce qui leur permet de développer un effort de reprise d'une partie de la charge. Une structure d'interconnexion fait travailler ensemble les éléments de support, en reportant les sollicitations sur les éléments de support adjacents. La capacité de ce bandage à porter une certaine charge provient de la sollicitation en flexion des éléments de support présents dans l'aire de contact du bandage élastique non pneumatique, et elle provient également de la sollicitation également en flexion, des éléments de support en dehors de l'aire de contact du bandage élastique non pneumatique, via la structure d'interconnexion.

Par ailleurs le document US-A-1329215 décrit un bandage flexible selon le préambule de la revendication 1.

Enfin, on peut rappeler que selon l'enseignement de la demande de brevet WO 00/37.269 précitée, dans l'aire de contact au sol, il existe une différence de flexion (radialement) entre éléments de support adjacents. On sait aussi que chacun des éléments de support est capable de supporter de la torsion et que, avant de pénétrer dans l'aire de contact, les éléments de support subissent une certaine déradialisation. Pendant le roulage en service normal du bandage, la pénétration des éléments de support dans l'aire de contact est quelque peu retardée, ce qui provoque une déradialisation progressive. Puis, au fur et à mesure que les éléments de support franchissent l'aire de contact, ils reprennent une position radiale et, en sortie de l'aire de contact, ils subissent une déradialisation sensiblement symétrique de la première déradialisation par rapport au plan vertical passant par l'axe de rotation du bandage.

Quant à la structure d'interconnexion, tout en étant capable de transmettre une partie de la sollicitation des éléments de support sur les éléments de support voisins, on sait qu'elle est suffisamment flexible pour autoriser des déplacements relatifs des éléments de support les uns par rapport aux autres, non seulement dans le sens radial mais également dans le sens circonférentiel. La différence de déplacement des éléments de support dans le sens radial correspond à une différence de sollicitation en flexion de ceux-ci. La différence de déplacement dans le sens circonférentiel correspond à une sollicitation circonférentielle de la structure d'interconnexion, mise en évidence par la déradialisation.

Bien que le bandage élastique non pneumatique proposé s'avère parfaitement capable de supporter une charge importante en service normal, l'objectif de la présente invention est de perfectionner la structure porteuse proposée de façon à lui conférer une endurance considérablement améliorée, tout en maintenant sa très grande aptitude à supporter la charge.

L'invention propose un bandage flexible selon la revendication 1 de la circonférence.

De préférence, la structure d'interconnexion est arrangée radialement entre les éléments de support et la bande de roulement. De préférence, les éléments de support sont continus, d'un ancrage à une jante à l'autre en passant en regard de la bande de roulement. De préférence encore, la structure d'interconnexion est continue circonférentiellement, et avantageusement renforcée par exemple par des câbles ou fils ou rubans comme cela apparaîtra dans le suite.

L'invention propose de réaliser des articulations élastiques indépendantes les unes des autres, séparées les unes des autres circonférentiellement, chacune étant solidaire d'un côté d'un élément de support et de l'autre de la structure d'interconnexion, pour transmettre les efforts entre éléments de support et structure d'interconnexion. Le fonctionnement avantageux du bandage proposé par l'invention permet d'assurer un bon fonctionnement d'ensemble de la structure portante tout en découplant judicieusement ses éléments constitutifs, gage d'une endurance excellente combinée à des performances excellentes.

L'invention est décrite plus en détail au moyen des figures suivantes, sur lesquelles :
- la figure 1 est une perspective partielle du bandage non pneumatique, avec un écorché permettant de voir des éléments internes ;
- la figure 2 est un agrandissement de la zone identifiée par la lettre A à la figure 1 ;
- la figure 3 est une coupe partielle, par le plan perpendiculaire à l'axe et passant par la trace B à la figure 1 ;
- les figures 4 à 6 illustrent la déformation des articulations élastiques lorsqu'elles passent dans l'aire de contact ;
- la figure 7 montre une variante de réalisation des articulations élastiques.

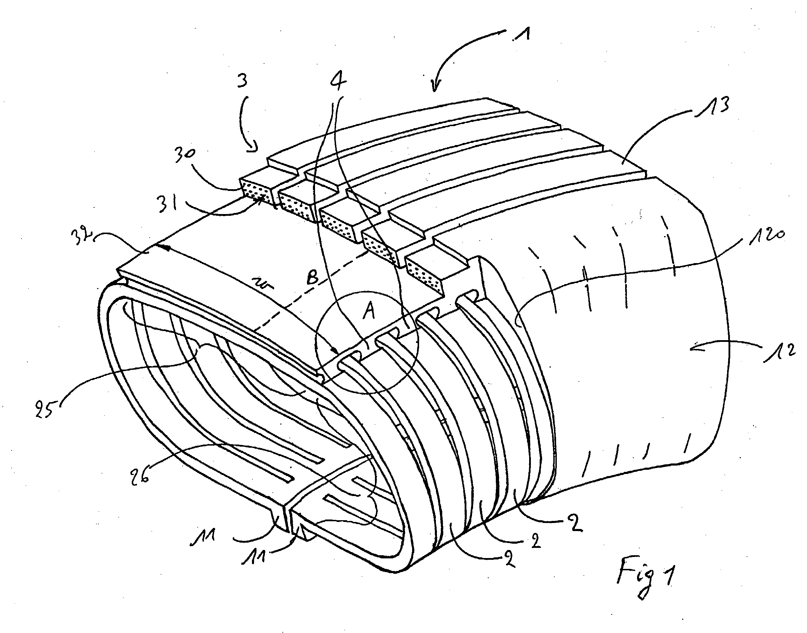

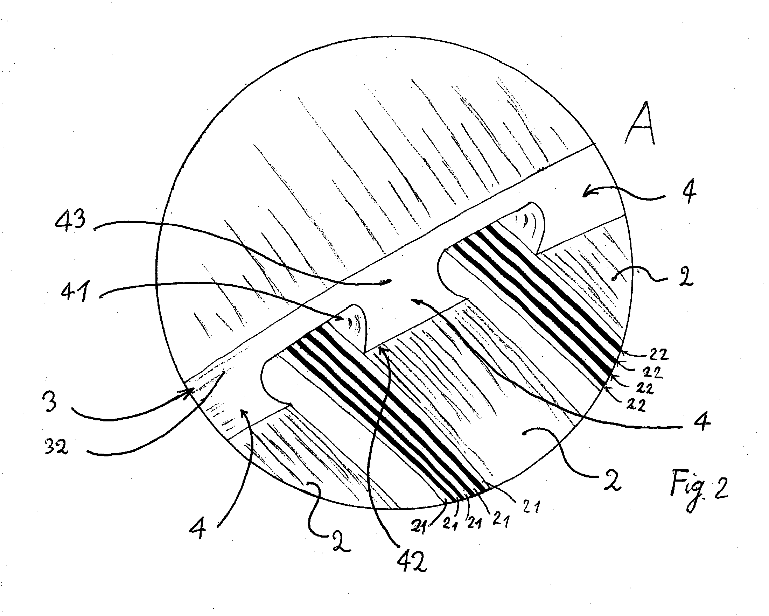

La figure 1 illustre un mode de réalisation dans lequel le profil du bandage délimite une cavité interne torique de section ovoïdale. Le bandage 1 comporte deux zones de fixation 11 séparables axialement, deux flancs 12 et une bande de roulement 13. La bande de roulement 13 comporte plusieurs nervures parallèles, mais cet aspect n'a bien entendu aucun caractère limitatif. Les flancs 12 sont arrondis et occupent la majeure partie de la hauteur radiale du bandage 1. La structure portante comporte des éléments de support 2. Les éléments de support 2 sont adjacents circonférentiellement et s'étendent chacun sensiblement radialement d'une zone de fixation 11 à l'autre. Comme on le voit à la figure 2, les éléments de support 2 comportent un empilage de lames 21 en matière composite, flexibles, superposées avec interposition d'une couche d'élastomère 22 entre les lames 21. Le faisceau de lames ainsi collées les unes sur les autres forme une poutre apte à être sollicitée en flexion. Cet aspect de la constitution du lamifié n'est cependant pas limitatif.

La structure portante comporte aussi une structure d'interconnexion 3 entre les éléments de support 2, de préférence arrangée radialement entre la bande de roulement et les éléments de support 2. La structure d'interconnexion 3 est capable de répartir une sollicitation radiale circonférentiellement entre plusieurs éléments de support, tout en autorisant des différences de déplacement entre éléments de support adjacents. A cette fin, la structure d'interconnexion 3 comporte de préférence un renfort orienté sensiblement circonférentiellement, par exemple un renfort monofilamentaire 30 noyé dans une matrice élastomérique 31, bobiné en plusieurs endroits pour ceinturer l'ensemble des éléments de support 2 en regard de la bande de roulement, elle-même étant de préférence en caoutchouc. Les spires de renfort monofilamentaire 30 sont dans ce cas particulier arrangées radialement par-dessus une couche 32 d'une matière élastomérique. Le renfort monofilamentaire 30 est enroulé sensiblement circonférentiellement, c'est à dire selon un angle proche de 0° par rapport à un plan perpendiculaire à l'axe. Il peut s'agir d'un bobinage dudit renfort monofilamentaire 30 selon le nombre de tours voulu ou, ce qui est équivalent, il peut s'agir d'anneaux monofilamentaires en nombre voulu. Notons que l'on pourrait, en variante du renfort monofilamentaire 30, utiliser de nombreux câbles parmi ceux qui sont couramment utilisés comme renforcement à zéro degré disposé à l'intérieur de la bande de roulement des pneumatiques usuels. On pourrait aussi utiliser un renfort ayant l'allure d'une lame ou un ruban par exemple en matière composite renforcée, plutôt qu'un renfort monofilamentaire. Là encore, la lame ou le ruban est bobiné selon le nombre de tours voulu ou utilisé sous la forme d'anneaux employés en nombre voulu.

Pour d'autres détails sur la constitution de ces éléments de support et de la structure d'interconnexion, le lecteur pourra se reporter utilement à la demande de brevet WO 00/37.269 précitée dont la description est incorporée ici par référence.

Rappelons simplement que la matière composite des lames 21 et du renfort monofilamentaire 30 comporte des fibres de renforcement noyées dans une résine. On utilise de préférence une matrice en résine thermodurcissable, mais dans certaines applications moins sollicitantes, une résine thermoplastique pourrait convenir. Les fibres sont de préférence disposées majoritairement longitudinalement dans chaque lame et dans chaque renfort monofilamantaire. On utilise par exemple des fibres de verre. Bien entendu, on pourrait utiliser de nombreuses autres fibres, comme par exemple des fibres de carbonne. On pourrait aussi utiliser un hybride préparé avec des fibres de différentes natures.

Notamment, on peut utiliser des renforts monofilamentaires tels que décrits dans la demande de brevet EP 1 167 080. Cette demande propose un élément composite longiligne, de longueur très grande par rapport à la section, comportant des fibres techniques sensiblement symétriques, lesdites fibres étant en grandes longueurs, lesdites fibres étant imprégnées dans une résine thermodurcie ayant un module initial d'extension valant au moins 2.3 GPa, dans lequel lesdites fibres sont toutes sensiblement parallèles entre elles, la teneur en fibres étant comprise entre 30% et 80% de la masse globale de l'élément composite longiligne, la densité de l'élément composite longiligne étant inférieure à 2.2, ledit élément composite longiligne ayant en flexion une contrainte de rupture en compression supérieure à la contrainte de rupture en extension, ledit élément composite longiligne ayant une déformation élastique en compression au moins égale à 2%. Par exemple, lesdites fibres techniques sensiblement symétriques sont des fibres de verre.

On voit que les éléments de support 2 et la structure d'interconnexion 3 sont reliées par des articulations élastiques 4. Chaque élément de support 2 est surmonté radialement d'une telle articulation élastique 4, qui assure la liaison mécanique entre les éléments de support 2 et la structure d'interconnexion 3, les efforts transmis des uns à l'autre passant par lesdites articulations élastiques 4. Dans un mode préféré de réalisation de l'invention, lesdits éléments de support 2 sont axialement continus en regard de la bande de roulement et au-delà, jusqu'aux zones de fixation 11. On voit que chaque élément de support 2 comporte une partie médiane 25 correspondant sensiblement à la largeur de la structure d'interconnexion 3. C'est de cette façon qu'est réalisée, dans l'exemple non limitatif illustrant l'invention, ladite première partie (de chaque élément de support) disposée au moins en regard d'une partie de la bande de roulement. La structure d'interconnexion 3 occupe sensiblement toute la largeur de la bande de roulement 13. Chaque articulation élastique 4 permet de relier la partie médiane 25 des éléments de support 2 à la structure d'interconnexion 3. On voit aussi que chaque élément de support 2 comporte, de chaque côté du bandage, une partie latérale 26 s'étendant dans le flanc 12 et rejoignant la zone de fixation 11. C'est de cette façon qu'est réalisée, dans l'exemple non limitatif illustrant l'invention, ladite autre partie (de chaque élément de support) disposée au-delà de la bande de roulement, là où les éléments de support sont fléchis lorsque le bandage est chargé.

L'articulation élastique 4 proposée par la présente invention pourrait trouver à s'appliquer dans bien d'autres modes de réalisation de bandages non pneumatiques dont la structure portante comporte des éléments de support dont la flexion sous charge procure l'essentiel sinon toute la capacité de supporter une charge, et une structure d'interconnexion entre éléments de support.

Intéressons-nous à la partie du bandage illustrée à la figure 2. On voit au grossissement représenté à la figure 2 trois articulations élastiques 4 disposées entre éléments de support 2 et structure d'interconnexion 3. Chaque articulation élastique 4 présente une semelle 42 solidaire d'un élément de support 2 et une tête 43 solidaire de la structure d'interconnexion 3. Entre semelle 42 et tête 43, chaque articulation élastique 4 présente des faces transversales 41 libres, c'est à dire non en contact avec un autre élément du bandage 1. La déformation des faces transversales (voir les explications sur le fonctionnement du bandage ci-dessous) n'est donc pas contrariée par d'autres éléments dont la présence s'y opposerait.

Chaque articulation élastique 4 est de préférence en matière élastomérique. On utilise avantageusement une matière élastomérique à faible hystérèse. A titre d'exemple, notons que l'utilisation de mélanges de caoutchoucs vulcanisables au soufre du genre de ceux que l'on utilise pour les flancs des pneumatiques donne de bons résultats. De tels mélanges sont d'hystérèse suffisamment faible et résistent suffisamment bien aux déchirures, ce qui permet aux articulations élastiques de fonctionner correctement dans leur rôle de transmission des efforts entre les éléments de support 2 et la structure d'interconnexion, tout en acceptant des déformations importantes et répétées. Une autre matière donnant d'excellents résultats est le polyuréthane.

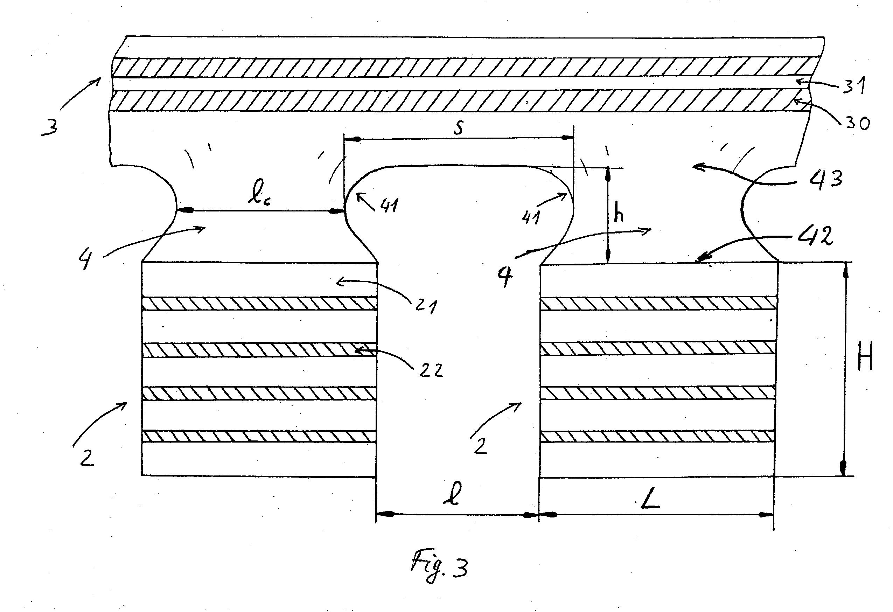

A la figure 3, on voit que chacun des éléments de support 2 a une largeur « L » dans le sens circonférentiel et une hauteur « H » dans le sens radial. On voit que l'écart circonférentiel entre deux arceaux adjacents présente une longueur « l ». Quant aux articulations élastiques 4, elles présentent une hauteur radiale « h » et une largeur circonférentielle « s ». On a déjà vu que, dans ce mode de réalisation de l'invention, chaque articulation élastique 4 est continue sensiblement sur toute la largeur « w » de la bande de roulement 13 (voir figure 1). On voit également que chaque articulation élastique 4 présente des faces transversales 41 de forme sensiblement concave, de sorte que la largeur de l'articulation élastique 4 au centre de l'épaisseur radiale de celle-ci, appelée largeur l_{c}, est quelque peu inférieure à la largeur L de la semelle 42. Il existe donc, dans l'épaisseur radiale de chaque articulation élastique, une position intermédiaire entre la semelle et la tête, position intermédiaire dans laquelle la largeur de l'articulation élastique est strictement inférieure à la largeur maximale de l'articulation élastique au voisinage de chaque semelle ou tête de chaque articulation élastique, de préférence est inférieure à 90% de ladite largeur maximale L, prise dans cet exemple à la jonction de la semelle 42 de l'articulation élastique 4 avec l'élément de support 2.

A titre d'illustration, les valeurs de dimensionnement ci-dessous donnent quelques points de repère qui se sont avérés permettre un très bon fonctionnement de la structure proposée pour un bandage élastique non pneumatique :
- la largeur maximale d'une articulation élastique 4 est sensiblement égale à la largeur L d'un élément de support 2 ;
- la longueur axiale d'une articulation élastique 4 est sensiblement égale à la largeur « w » de la bande de roulement 13 ;
- la hauteur h d'une articulation élastique 4 est plus petite que la hauteur H d'un élément de support 2 ;
- la hauteur h d'une articulation élastique 4 est plus grande que la moitié de la hauteur H d'un élément de support 2 ;
- la largeur l_{c} au centre d'une articulation élastique 4 vaut environ 80 % de la largeur L de l'articulation élastique 4.

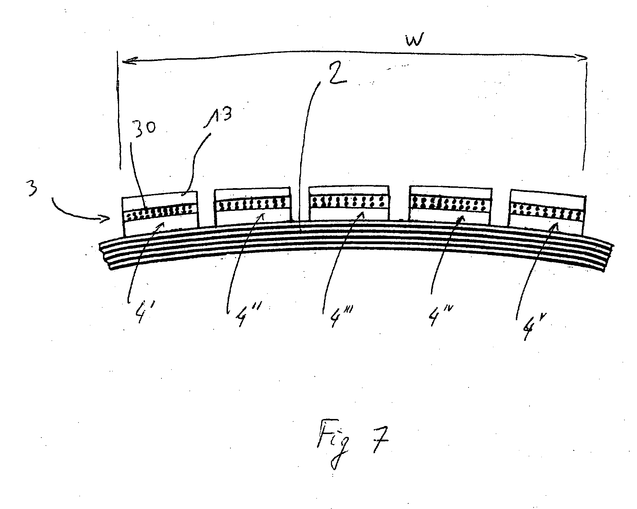

A la figure 7, on voit plusieurs tronçons 4ⁱ, 4", 4ⁱⁱⁱ, 4^{iv}, 4^{v} juxtaposés transversalement, tout en laissant un petit espace entre tronçons. La longueur cumulée des tronçons 4ⁱ, 4ⁱⁱ, 4ⁱⁱⁱ, 4^{iv}, 4^{v} est inférieure à la largeur « w » de la structure d'interconnexion 3. Ensemble, les tronçons 4ⁱ, 4", 4ⁱⁱⁱ, 4^{iv}, 4^{v} constituent une variante d'articulation élastique liant l'élément de support 2 à la structure d'interconnexion 3. Une autre variante possible, valable aussi bien si l'articulation est continue transversalement ou est formée par plusieurs tronçons 4ⁱ, 4ⁱⁱ, 4ⁱⁱⁱ, 4^{iv}, 4^{v}, est que la section de l'articulation par un plan perpendiculaire à l'axe, soit variable lorsque l'on déplace le plan de section axialement.

Bien entendu, la largeur " L " des éléments de support 2 obéit notamment à des considérations d'uniformité (plus il y en a, plus l'uniformité du bandage sera grande) et de commodité de fabrication (plus il y en a, plus faible sera la raideur en torsion autour de l'axe du bandage). A titre d'illustration encore, on donne quelques points de repères ci-dessous :
- la hauteur H d'un élément de support 2 est du même ordre de grandeur que sa largeur L ;
- la largeur L des éléments de support 2 peut varier typiquement entre 5 et 15 mm pour un bandage élastique non pneumatique dimensionné pour une charge nominale de l'ordre de 500 kg, ou en d'autres termes pour chaque tranche de charge de 500kg ;
- l'espace s entre deux éléments de support adjacents, mesuré dans la partie représentée à la figure 3, varie corrélativement typiquement entre 4 et 8 mm.

Revenons aux zones de fixation 11 visibles à la figure 1. On utilise ici la désignation « zone de fixation » pour désigner en général la partie du bandage destinée à coopérer avec une pièce mécanique rigide solidaire par ailleurs d'un moyeu. De préférence, la zone de fixation est encastrée sur ladite pièce mécanique. Là encore, pour d'autres détails sur la zone de fixation, sur la liaison du bandage à un moyeu, par exemple concernant la possibilité d'utiliser une seule zone de fixation monobloc, sur l'intérêt de modifier la largeur d'appui de la surface radialement intérieure du bandage sur une pièce mécanique rigide, le lecteur pourra se reporter utilement à la demande de brevet WO 00/37.269 précitée. Soulignons, entre autres, que comme expliqué dans la demande de brevet précitée, la zone de fixation pourrait tout aussi bien être unique et monobloc, la section radiale du bandage étant alors fermée, le choix de l'une ou l'autre disposition étant de toute façon non spécifique de la présente invention. En ce qui concerne par exemple le montage des zones de fixation 11 séparables axialement, on voit aux figures 8 et 9 de la demande de brevet WO 00/37.269, une sorte de jante très étroite formée par deux viroles intérieures 380 et 381 et un insert 321 dont une partie forme une virole extérieure, ce qui permet de pincer chacune des zones de fixation pour obtenir un encastrement de la partie radialement intérieur de la structure porteuse.

Abordons plus en détail le fonctionnement du bandage élastique non pneumatique en roulage sous charge.

Rappelons d'abord que le bandage illustrant l'invention comporte des éléments lamifiés disposés sensiblement radialement. A l'image de ce que l'on sait du fonctionnement d'un pneu radial usuel, notons que les éléments lamifiés se « déradialisent » quelque peu lors du passage dans l'aire de contact ce qui, outre la flexion, les sollicite aussi en torsion. On appelle " déradialisation " le fait que des renforts qui sont normalement orientés radialement dans les flancs (fils de carcasse pour un pneu radial usuel, éléments de support pour les modes de réalisation du bandage décrits ici) s'écartent quelque peu de cette orientation radiale, le maximum de cet écart étant observé pour les renforts en regard de l'entrée et de la sortie de l'aire de contact avec le sol. Notons que cette déradialisation est possible par l'aptitude qu'ont les éléments de support de s'accommoder à d'autres déformations qu'une simple flexion dans un plan radial.

La structure portante, en se déformant, permet une certaine mise à plat de la zone de la bande de roulement concernée par le contact avec le sol, de sorte que l'empreinte au sol du bandage chargé présente une certaine surface, à l'instar du fonctionnement bien connu des pneumatiques gonflés.

Rappelons que la partie de la structure portante radialement intérieure, la plus proche de l'axe de rotation, a une contribution importante à la flèche sous charge, donc au confort procuré par le bandage. Dès lors, il convient que la ou les zones de fixation soient localisées de préférence sur une fraction correspondant à au plus 50% de la distance séparant axialement les limites latérales du bandage. Ladite partie radialement intérieure de la structure portante flexible est ainsi en porte-à-faux assez prononcé au-delà de la ou des zones de fixation. Une disposition constructive favorable est que les éléments de support soient, juste au-delà de la zone de fixation, orientés selon une direction sensiblement parallèle à l'axe de rotation. C'est ce qui apparaît dans l'exemple décrit. Notons enfin que, le bandage décrit étant symétrique, la zone de fixation est sensiblement centrée entre les limites axiales dudit bandage, sans que ceci ne soit limitatif. On pourrait bien entendu adopter une architecture dissymétrique, notamment dans la localisation de la zone de fixation.

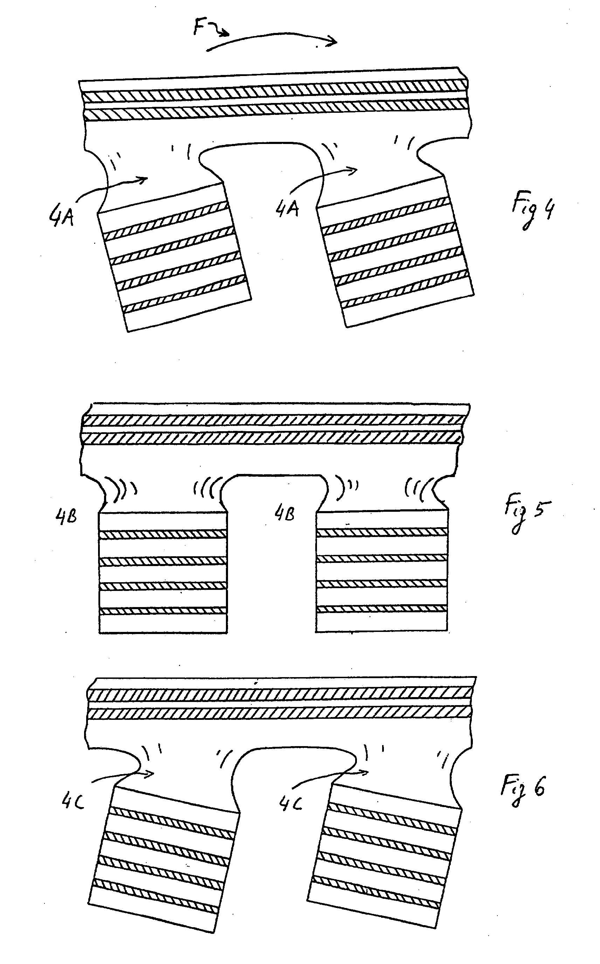

Les figures 4 à 6 permettent de visualiser la partie du bandage élastique correspondant à l'airé de contact en fonctionnement sous une charge nominale et montrent la déformation des articulations élastiques 4 provenant de la déformation des éléments de support 2 et de la structure d'interconnexion 3. Selon le sens de rotation du bandage, on aperçoit la déformation des articulations élastiques à l'entrée de l'aire de contact (figure 4), en observant l'articulation élastique 4A. On aperçoit également la déformation des articulations élastiques au centre de l'aire de contact (figure 5), là où la flexion radiale des éléments de support 2 est maximale, en observant l'articulation élastique 4B. Enfin, on aperçoit à la sortie de l'aire de contact (figure 6) la déformation de l'articulation élastique 4C, symétrique de celle de l'articulation élastique 4A.

On voit que les éléments de support 2, non seulement sont fléchis, mais également basculent par rapport à l'orientation moyenne de la structure d'interconnexion 3. La présence des articulations élastiques 4 réalise une liaison des éléments de support 2 à la structure d'interconnexion 3 permettant le transfert des sollicitations mécaniques de service tout en autorisant des déplacements suffisants, notamment des torsions des éléments de support, afin de procurer à l'ensemble de la structure porteuse une très grande endurance. Les éléments de support 2 se trouvent ainsi liés à la structure d'interconnexion 3 avec une sorte d'articulation, un peu comme des éléments de bras de suspension sont liés à la caisse des véhicules le plus souvent par des articulations élastiques en caoutchouc.

L'existence d'un couple moteur ou d'un couple freineur ou d'un angle de carrossage ou de dérive va bien entendu superposer d'autres déformations à celles expliquées ci-dessus.

Soulignons que si l'on s'est attaché ci-dessus à décrire la structure porteuse, il n'est pas exclu que le bandage comporte une peau extérieure 120 lui donnant un aspect uniforme comme on le voit à la partie droite de la figure 1. Cette peau 120 recouvre l'ensemble des éléments de support 2, par l'extérieur de ceux-ci. Il pourrait également y avoir une matière entre les éléments de support 2, comblant partiellement ou complètement l'espace entre deux éléments de support 2 adjacents. Un autre avantage de cette peau est l'étanchéïté qu'elle procure à la cavité interne délimitée par la structure portante, évitant ainsi l'encrassement de la cavité interne par la pénétration de cailloux, d'eau, de boue ; ceci est susceptible de perturber le fonctionnement du bandage, voire de l'endommager. Une telle peau n'est cependant pas conçue pour transmettre des efforts ni entre éléments de support ni entre éléments de support et structure d'interconnexion.

Soulignons aussi que l'on peut trouver avantageux, pour des questions d'économie de matière employée, que le bandage ne comporte pas de peau habillant les éléments de support 2 dans les flancs, c'est à dire que les éléments de support 2 restent nus au moins dans les flancs, le flanc de l'objet final ayant alors l'allure de la partie de gauche de la figure 1. Cette partie de la figure 1 peut donc être représentative de l'apparence réelle du flanc, et pas seulement être un écorché. Dans le même ordre d'idées, la bande de roulement pourrait laisser apparaître des communications avec la cavité interne, c'est à dire ne pas être étanche.

Dans une autre variante constructive (non représentée), on pourrait installer la structure d'interconnexion radialement à l'intérieur des éléments de support au moins partiellement, avec interposition d'articulations élastiques, et disposer une partie d'usure (la bande de roulement), circonférentiellement continue ou non, radialement à l'extérieur des éléments de support 2.

L'architecture du bandage proposée permet de construire des bandages conçus pour fonctionner sans pression de gonflage (bandage non pneumatique). Notons que, et ceci est une remarque importante, rien n'empêche de mettre dans le bandage proposé une certaine pression d'air. Il suffit bien entendu de faire en sorte que le bandage soit étanche à l'air (présence d'une peau 120 et bande de roulement non perforée), ou soit nanti d'une chambre à air. On peut alors ajuster les caractéristiques, notamment de flexibilité, en jouant sur une certaine mise en pression " p " de la cavité interne. En faisant une analogie avec un pneu gonflé, la mise en pression " p " évoquée ici pour le bandage selon l'invention se compare à la variation de pression Δp autour d'une pression nominale P pour laquelle ledit pneu à gonfler est conçu. Ainsi et pour fixer les idées, lorsque selon ses destinations, on utilise un pneu conventionnel à des niveaux de pressions allant de P à P+Δp, on va utiliser le bandage selon l'invention, selon ses destinations, à des " niveaux " de pression allant de 0 (c'est à dire pas de pression) à Δp.

En résumé, et pour dire l'essentiel, les éléments de support 2 portent la charge ; ils ne travaillent pas de façon complètement isolée les uns des autres, mais ils sont reliés entre eux par une structure d'interconnexion 3 avec interposition d'articulations élastiques 4, de façon à assurer un bon fonctionnement d'ensemble, en évitant des cisaillements trop intenses, et de façon à offrir une bonne uniformité, c'est à dire une relative constance des propriétés quelle que soit la position circonférentielle du bandage par rapport au sol.

## Revendications

1. Bandage flexible ayant une structure portante flexible s'étendant circonférentiellement autour d'un axe de rotation, une bande de roulement à la périphérie radialement extérieure de la structure portante, et au moins une zone de fixation, radialement du côté de l'axe de rotation, pour l'immobilisation de ladite structure portante à un disque de roue, la structure portante comportant :
→ une pluralité d'éléments de support s'étendant essentiellement transversalement, dont une première partie est disposée au moins en regard d'une partie de la bande de roulement, et dont une autre partie est disposée au-delà de la bande de roulement, lesdits éléments de support étant juxtaposés circonférentiellement et répartis tout autour de la circonférence,
→ une structure d'interconnexion, assurant une interconnexion circonférentiellement entre les éléments de support,
le bandage comportant une pluralité d'articulations élastiques, chacune disposée au moins en partie entre la structure d'interconnexion et la première partie de chaque élément de support, et
le bandage étant **caractérisé en ce que** les éléments de support sont constitués par un empilage de lames en matière composite avec interposition d'une couche d'élastomère entre chaque lame.

2. Bandage selon la revendication 1, dans lequel la structure d'interconnexion est arrangée radialement entre les éléments de support et la bande de roulement.

3. Bandage selon la revendication 1, dans lequel chaque articulation élastique est en matière élastomérique.

4. Bandage selon la revendication 1, dans lequel chaque articulation élastique est en mélange de caoutchouc vulcanisable au soufre.

5. Bandage selon la revendication 1, dans lequel chaque articulation élastique est en polyuréthane.

6. Bandage selon la revendication 1, dans lequel chaque articulation élastique comporte plusieurs tronçons juxtaposés transversalement.

7. Bandage selon la revendication 1, dans lequel la largeur L des éléments de support est comprise entre 5 et 15 mm pour un bandage élastique non pneumatique dimensionné pour une charge nominale de l'ordre de 500 kg.

8. Bandage selon l'une des revendications 1 à 7, dans lequel lesdits éléments de support sont axialement continus en regard de la bande de roulement.

9. Bandage selon l'une des revendications 1 à 8, comportant deux zones de fixation séparables axialement.

10. Bandage selon l'une des revendications 1 à 9, dans lequel chaque élément de support est continu d'une zone de fixation à l'autre.

11. Bandage selon la revendication 8, dans lequel les lames sont constituées d'une matrice en résine thermodurcissable ou thermoplastique, renforcée par des fibres disposées majoritairement longitudinalement dans chaque lame.

12. Bandage selon l'une des revendications 1 à 11 dans lequel les éléments de support sont nus dans les flancs.

13. Bandage selon l'une des revendications 1 à 12, dans lequel les éléments de support sont disposés sensiblement radialement.

14. Bandage selon l'une des revendications 1 à 13 dans lequel la structure d'interconnexion est continue circonférentiellement.

15. Bandage selon l'une des revendications 1 à 14 dans lequel la structure d'interconnexion est renforcée.

16. Bandage selon la revendication 15 dans lequel la structure d'interconnexion comporte un renfort orienté sensiblement circonférentiellement.

17. Bandage selon l'une des revendications 1 à 16 dans lequel chaque articulation élastique est continue sensiblement sur toute la largeur « w » de la bande de roulement.

18. Bandage selon l'une des revendications 1 à 17 dans lequel, chaque articulation élastique présentant une semelle solidaire d'un élément de support et une tête solidaire de la structure d'interconnexion, entre semelle et tête, chaque articulation élastique présente des faces transversales libres.

19. Bandage selon la revendication 18 dans lequel, dans l'épaisseur radiale de chaque articulation élastique, il existe une position intermédiaire entre la semelle et la tête, position intermédiaire dans laquelle la largeur de l'articulation élastique est strictement inférieure à la largeur maximale de l'articulation élastique au voisinage de chaque semelle ou tête de chaque articulation élastique.

20. Bandage selon la revendication 19 dans lequel chaque articulation élastique présente des faces transversales de forme sensiblement concaves, de sorte que la largeur de l'articulation élastique au centre de l'épaisseur radiale de celle-ci, appelée largeur l_{c}, est inférieure à la largeur L de la semelle.

21. Bandage selon la revendication 19 dans lequel la largeur à la position intermédiaire est inférieure à 90% de la largeur L maximale de l'articulation élastique.

22. Bandage selon la revendication 20 dans lequel la largeur l_{c} au centre d'une articulation élastique vaut sensiblement 80 % de la largeur L de l'articulation élastique.

23. Bandage selon l'une des revendications 1 à 22 dans lequel la largeur maximale d'une articulation élastique est sensiblement égale à la largeur L d'un élément de support.

24. Bandage selon l'une des revendications 1 à 23 dans lequel la hauteur h d'une articulation élastique est plus petite que la hauteur H d'un élément de support.

25. Bandage selon l'une des revendications 1 à 24 dans lequel la hauteur h d'une articulation élastique est plus grande que la moitié de la hauteur H d'un élément de support.

## Patentansprüche

1. Flexibler Reifen mit einer flexiblen tragenden Struktur, die sich in Umfangsrichtung um eine Drehachse herum erstreckt, einem Laufstreifen am radial äußeren Umfang der tragenden Struktur und mindestens einem Befestigungsbereich, der radial auf der Seite der Drehachse angeordnet ist, zur Fixierung der tragenden Struktur an einer Radscheibe, wobei die tragende Struktur aufweist:
mehrere sich im Wesentlichen quer erstreckende Stützelemente, von denen ein erster Abschnitt wenigstens gegenüber einem Abschnitt des Laufstreifens angeordnet ist und von denen ein anderer Abschnitt jenseits des Laufstreifens angeordnet ist, wobei die Stützelemente in Umfangsrichtung nebeneinander angeordnet sind und um den gesamten Umfang herum verteilt sind,
eine Verbindungsstruktur, die eine Verbindung in Umfangsrichtung zwischen den Stützelementen sicherstellt,
wobei der Reifen mehrere elastische Gelenke aufweist, die jeweils wenigstens teilweise zwischen der Verbindungsstruktur und dem ersten Abschnitt jedes Stützelements angeordnet sind, und
wobei der Reifen **dadurch gekennzeichnet ist, dass** die Stützelemente aus einem Stapel von Lamellen aus Verbundmaterial mit Anordnung jeweils einer Elastomerschicht zwischen den einzelnen Lamellen bestehen.

2. Reifen nach Anspruch 1, wobei die Verbindungsstruktur radial zwischen den Stützelementen und dem Laufstreifen angeordnet ist.

3. Reifen nach Anspruch 1, wobei jedes elastische Gelenk aus elastomerem Material hergestellt ist.

4. Reifen nach Anspruch 1, wobei jedes elastische Gelenk aus einer Mischung aus vulkanisierbarem Kautschuk mit Schwefel hergestellt ist.

5. Reifen nach Anspruch 1, wobei jedes elastische Gelenk aus Polyurethan hergestellt ist.

6. Reifen nach Anspruch 1, wobei jedes elastische Gelenk mehrere in Querrichtung nebeneinander angeordnete Abschnitte aufweist.

7. Reifen nach Anspruch 1, wobei die Breite L der Stützelemente zwischen 5 und 15 mm für einen drucklosen elastischen Reifen beträgt, der für eine Nennlast in der Größenordnung von 500 kg dimensioniert ist.

8. Reifen nach einem der Ansprüche 1 bis 7, wobei die Stützelemente gegenüber dem Laufstreifen axial durchgehend sind.

9. Reifen nach einem der Ansprüche 1 bis 8, welcher zwei axial trennbare Befestigungsbereiche aufweist.

10. Reifen nach einem der Ansprüche 1 bis 9, wobei jedes Stützelement von einem Befestigungsbereich bis zum anderen durchgehend ist.

11. Reifen nach Anspruch 8, wobei die Lamellen aus einer Matrix aus duroplastischem oder thermoplastischem Harz bestehen, die durch Fasern verstärkt ist, welche in jeder Lamelle überwiegend in Längsrichtung angeordnet sind.

12. Reifen nach einem der Ansprüche 1 bis 11, wobei die Stützelemente in den Seitenwänden freiliegend sind.

13. Reifen nach einem der Ansprüche 1 bis 12, wobei die Stützelemente im Wesentlichen radial angeordnet sind.

14. Reifen nach einem der Ansprüche 1 bis 13, wobei die Verbindungsstruktur in Umfangsrichtung durchgehend ist.

15. Reifen nach einem der Ansprüche 1 bis 14, wobei die Verbindungsstruktur verstärkt ist.

16. Reifen nach Anspruch 15, wobei die Verbindungsstruktur eine Verstärkung aufweist, die im Wesentlichen in Umfangsrichtung ausgerichtet ist.

17. Reifen nach einem der Ansprüche 1 bis 16, wobei jedes elastische Gelenk im Wesentlichen auf der gesamten Breite "w" des Laufstreifens durchgehend ist.

18. Reifen nach einem der Ansprüche 1 bis 17, wobei, während jedes elastische Gelenk eine mit einem Stützelement fest verbundene Sohle und ein mit der Verbindungsstruktur fest verbundenes Kopfstück aufweist, jedes elastische Gelenk zwischen Sohle und Kopfstück freie Querseiten aufweist.

19. Reifen nach Anspruch 18, wobei in der radialen Dicke jedes elastischen Gelenks eine Zwischenposition zwischen der Sohle und dem Kopfstück existiert, wobei in dieser Zwischenposition die Breite des elastischen Gelenks streng kleiner als die maximale Breite des elastischen Gelenks in der Nähe der jeweiligen Sohle oder des jeweiligen Kopfstücks des jeweiligen elastischen Gelenks ist.

20. Reifen nach Anspruch 19, wobei jedes elastische Gelenk Querseiten mit einer im Wesentlichen konkaven Form aufweist, derart, dass die Breite des elastischen Gelenks in der Mitte der radialen Dicke desselben, als Breite l_{c} bezeichnet, kleiner als die Breite L der Sohle ist.

21. Reifen nach Anspruch 19, wobei die Breite in der Zwischenposition kleiner als 90 % der maximalen Breite L des elastischen Gelenks ist.

22. Reifen nach Anspruch 20, wobei die Breite l_{c} in der Mitte eines elastischen Gelenks im Wesentlichen 80 % der Breite L des elastischen Gelenks beträgt.

23. Reifen nach einem der Ansprüche 1 bis 22, wobei die maximale Breite eines elastischen Gelenks im Wesentlichen gleich der Breite L eines Stützelements ist.

24. Reifen nach einem der Ansprüche 1 bis 23, wobei die Höhe h eines elastischen Gelenks kleiner als die Höhe H eines Stützelements ist.

25. Reifen nach einem der Ansprüche 1 bis 24, wobei die Höhe h eines elastischen Gelenks größer als die Hälfte der Höhe H eines Stützelements ist.

## Claims

1. Flexible tyre having a flexible bearing structure extending circumferentially about an axis of rotation, a tread at the radially external periphery of the bearing structure, and at least one securing region, radially on the same side as the axis of rotation, for immobilizing the said bearing structure on a wheel disc, the bearing structure comprising:
• a plurality of support elements extending essentially transversely, a first part of which is positioned at least facing part of the tread, and another part of which is positioned beyond the tread, the said support elements being circumferentially juxtaposed and distributed all around the circumference,
• an interconnection structure providing circumferential interconnection between the support elements,
the tyre comprising a plurality of elastic articulations, each one positioned at least in part between the interconnection structure and the first part of each support element, and
the tyre being **characterized in that** the support elements are made up of a stack of leaves of composite material with the interposition of a layer of elastomer between each leaf.

2. Tyre according to Claim 1, in which the interconnection structure is arranged radially between the support elements and the tread.

3. Tyre according to Claim 1, in which each elastic articulation is made of elastomeric material.

4. Tyre according to Claim 1, in which each elastic articulation is made of a rubber compound that can be vulcanized using sulphur.

5. Tyre according to Claim 1, in which each elastic articulation is made of polyurethane.

6. Tyre according to Claim 1, in which each elastic articulation comprises several transversely juxtaposed portions.

7. Tyre according to Claim 1, in which the width L of the support elements is between 5 and 15 mm for a non-pneumatic elastic tyre rated for a nominal load of the order of 500 kg.

8. Tyre according to one of Claims 1 to 7, in which the said support elements are axially continuous facing the tread.

9. Tyre according to one of Claims 1 to 8, comprising two axially separable securing regions.

10. Tyre according to one of Claims 1 to 9, in which each support element is continuous from one securing region to the other.

11. Tyre according to Claim 8, in which the leaves are made up of a matrix of thermoset or thermoplastic resin reinforced with fibres arranged for the most part longitudinally within each leaf.

12. Tyre according to one of Claims 1 to 11, in which the support elements are bare in the sidewalls.

13. Tyre according to one of Claims 1 to 12, in which the support elements are positioned substantially radially.

14. Tyre according to one of Claims 1 to 13, in which the interconnection structure is circumferentially continuous.

15. Tyre according to one of Claims 1 to 14, in which the interconnection structure is reinforced.

16. Tyre according to Claim 15, in which the interconnection structure comprises a reinforcement oriented substantially circumferentially.

17. Tyre according to one of Claims 1 to 16, in which each elastic articulation is continuous substantially over the entire width "w" of the tread.

18. Tyre according to one of Claims 1 to 17, in which, with each elastic articulation having a base secured to a support element and a top secured to the interconnection structure, between base and top, each elastic articulation has free transverse faces.

19. Tyre according to Claim 18, in which, in the radial thickness of each elastic articulation, there is an intermediate position between the base and the top in which intermediate position the width of the elastic articulation is strictly less than the maximum width of the elastic articulation in the vicinity of each base or top of each elastic articulation.

20. Tyre according to Claim 19, in which each elastic articulation has transverse faces of substantially concave shape such that the width of the elastic articulation at the centre of the radial thickness thereof, referred to as the width l_{c}, is less than the width L of the base.

21. Tyre according to Claim 19, in which the width of the intermediate position is less than 90% of the maximum width L of the elastic articulation.

22. Tyre according to Claim 20, in which the width l_{c} at the centre of an elastic articulation equals substantially 80% of the width L of the elastic articulation.

23. Tyre according to one of Claims 1 to 22, in which the maximum width of an elastic articulation is substantially equal to the width L of the support element.

24. Tyre according to one of Claims 1 to 23, in which the height h of an elastic articulation is smaller than the height H of a support element.

25. Tyre according to one of Claims 1 to 24, in which the height h of an elastic articulation is greater than half the height H of a support element.
